(19) Europäisches Patentamt
European Patent Office
Office européen des brevets

(11) EP 2 878 629 B1

(12) **EUROPÄISCHE PATENTSCHRIFT**

(45) Veröffentlichungstag und Bekanntmachung des Hinweises auf die Patenterteilung:
**18.09.2019 Patentblatt 2019/38**

(51) Int Cl.:
***C08L 67/02*** *(2006.01)*

(21) Anmeldenummer: **14193461.2**

(22) Anmeldetag: **17.11.2014**

(54) **Polyester Zusammensetzungen**

Polyester compounds

Compositions de polyester

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2013 EP 13194640**
**18.01.2014 DE 102014000613**
**13.06.2014 EP 14172375**

(43) Veröffentlichungstag der Anmeldung:
**03.06.2015 Patentblatt 2015/23**

(73) Patentinhaber: **LANXESS Deutschland GmbH**
**50569 Köln (DE)**

(72) Erfinder:
- **Immel, Timo**
  **41539 Dormagen (DE)**
- **Endtner, Jochen**
  **50679 Köln (DE)**
- **Bienmüller, Matthias**
  **47803 Krefeld (DE)**

(56) Entgegenhaltungen:
**US-A- 4 874 809**

Bemerkungen:
Die Akte enthält technische Angaben, die nach dem Eingang der Anmeldung eingereicht wurden und die nicht in dieser Patentschrift enthalten sind.

EP 2 878 629 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft Zusammensetzungen, insbesondere thermoplastische Formmassen, enthaltend Polyethylenterephthalat (PET), Poly(1,4-cyclohexandimethanolterephthalat) (PCT), Talkum und Glasfasern, die Verwendung dieser Zusammensetzungen in Form von Formmassen zur Herstellung kurzzeitwärmeformbeständiger Erzeugnisse sowie ein Verfahren zur Herstellung kurzzeitwärmeformbeständiger Polyester basierter elektrischer oder elektronischer Erzeugnisse, insbesondere Polyester basierter optoelektronischer Erzeugnisse.

## Stand der Technik

Viele elektronische und elektrische Baugruppen und Komponenten umfassen temperaturempfindliche elektrische und/oder elektronische Erzeugnisse, insbesondere wärmeempfindliche integrierte Schaltkreise, Lithiumbatterien, Oszillatorkristalle, sowie optoelektronische Erzeugnisse. Im Zuge der Montage einer solchen Baugruppe müssen die an den Erzeugnissen vorgesehenen elektrischen Kontakte prozesssicher mit Leiterbahnen einer Platine und/oder mit elektrischen Kontakten anderer Erzeugnisse verbunden werden. Diese Montage erfolgt häufig mit Hilfe eines Lötverfahrens, bei dem am Erzeugnis vorgesehene Lötanschlüsse mit der Platine verlötet werden. Für jedes Erzeugnis ergibt sich dabei ein sicherer Bereich für die Lötzeit und Löttemperatur, in der gute Lötverbindungen hergestellt werden können. Um ein gutes Lötergebnis zu erreichen, müssen die Erzeugnisse während des Lötens über längere Zeiten hinweg erhöhten Temperaturen ausgesetzt werden. So wird z.B. beim Wellenlöten das auf die Platine gesteckte Erzeugnis zunächst langsam auf etwa 100-130 °C erwärmt. Danach erfolgt die eigentliche Lötung, die typischerweise bei 260 bis 285 °C erfolgt und mindestens 5 Sekunden dauert, gefolgt von der Erstarrungsphase, während der das Erzeugnis über mehrere Minuten langsam abkühlt.

Gemäß "http://de.wikipedia.org/wiki/Wellenl%C3%B6ten" ist das Wellenlöten, auch als Schwalllöten bezeichnet, ein Lötverfahren, mit dem elektronische Baugruppen (Leiterplatten, Flachbaugruppen) halb- oder vollautomatisch nach dem Bestücken gelötet werden. Die Lötseite der Leiterplatte wird zunächst im Fluxer mit einem Flussmittel benetzt. Danach wird die Leiterplatte mittels Konvektionsheizung (Verwirbelung der Wärme, wodurch praktisch überall, auch auf der Oberseite, die gleiche Temperatur anliegt), Wendelheizung oder Infrarot-Strahlern vorgeheizt. Dies geschieht zum einen, um den Lösungsmittelanteil des Flussmittels zu verdampfen (sonst Blasenbildung beim Lötvorgang), die chemische Wirkung der dabei zum Einsatz kommenden Aktivatoren zu erhöhen und um einen Temperaturverzug der Baugruppe sowie Schädigung der Bauteile durch einen zu steilen Temperaturanstieg beim nachfolgenden Löten zu vermeiden. In der Regel wird eine Temperaturdifferenz von unter 120 °C gefordert. Das bedeutet, dass bei einer Löttemperatur von 250 °C die Platine auf mindestens 130 °C aufgewärmt werden muss.

Genaue Daten ergeben sich durch Temperaturprofile. Dabei werden an einer Musterplatine Temperaturfühler an relevanten Punkten angebracht und mit einem Messgerät aufgezeichnet. So erhält man Temperaturkurven für die Platinenober- und unterseite für ausgewählte Bauteile. Im Anschluss daran wird die Baugruppe über eine oder zwei Lötwellen gefahren. Die Lötwelle wird durch Pumpen von flüssigem Lot durch eine Öffnung erzeugt. Die Löttemperatur liegt bei bleihaltigen Loten bei ca. 250 °C, bei den wegen der Verhinderung bleihaltiger Dämpfe bevorzugt bleifreien Loten ca. 10 °C bis 35 °C höher, also bei 260 °C bis 285 °C.

Die Lötzeit ist so zu wählen, dass die Erwärmung weder die Leiterplatte noch die wärmeempfindlichen Bauelemente schädigt. Die Lötzeit ist die Berührzeit des flüssigen Lotes pro Lötstelle. Die Richtzeiten betragen für einseitig kaschierte Leiterplatten weniger als eine Sekunde und bei zweiseitig kaschierten Leiterplatten nicht mehr als zwei Sekunden. Bei Mehrleiterplatten gelten individuelle Lötzeiten bis hin zu sechs Sekunden. Nach DIN EN 61760-1: 1998 ist die maximale Zeit für eine oder auch zwei Wellen zusammen 10 Sekunden. Genauere Details sind der oben genannten Literaturstelle zu entnehmen. Nach dem Löten ist eine Kühlung der Baugruppe sinnvoll, um die thermische Belastung schnell wieder zu verringern. Dies geschieht über eine direkte Kühlung durch ein Kühlaggregat (Klimaanlage) unmittelbar nach dem Lötbereich und/oder durch konventionelle Lüfter in der Senkstation oder einem Kühltunnel im Rücklaufband.

Hieraus ergeben sich an die verwendeten Materialien, insbesondere für die aus ökologischen Gründen immer häufiger einzusetzenden bleifreien Lote mit erhöhten Schmelztemperaturen, hohe Anforderungen hinsichtlich der Kurzzeitwärmeformbeständigkeit. Des Weiteren müssen derartige Materialien eine sehr gute Alterungsbeständigkeit unter den bei der Anwendung auftretenden Temperaturen haben.

Thermoplastische Polyester wie Polybutylenterephthalat (PBT) und Polyethylenterephthalat (PET) sind wegen ihrer guten Verarbeitbarkeit, der geringen Wasseraufnahme und der damit verbundenen hohen Dimensionsstabilität, der Farbstabilität bei hohen Temperaturen, insbesondere aber wegen ihrer herausragenden elektrischen Eigenschaften für Elektro- und Elektronikanwendungen, besonders geeignet. Allerdings stoßen thermoplastische Polyester wie PBT und PET wegen ihrer Schmelzpunkte von 220°C bzw. 260°C gerade bei Lötprozessen mit kurzzeitigen Spitzentemperaturen oberhalb dieser Schmelzpunkte rasch an ihre Grenzen.

Als thermoplastischer Polyester mit einem Schmelzpunkt von 285°C käme für das Wellenlöten prinzipiell das Poly(1,4-cyclohexylendimethylen)terephthalat (PCT) in Betracht. So beschreibt WO 2007/033129 A1 temperaturbeständige Zusammensetzungen für LED-Fassungen auf Basis des PCT, sowie Titandioxid und Glasfasern. Problematisch sind hier allerdings die im Vergleich zu PBT oder PET geringeren mechanischen Eigenschaften des PCT und bedingt durch die langsamere Kristallisation dessen schwierigere Verarbeitbarkeit. Auch ist man aufgrund der vom hohen Schmelzpunkt bestimmten hohen Verarbeitungstemperaturen bei der Wahl geeigneter Additive sehr eingeschränkt, was insbesondere für den Bereich der Flammschutzmittel, ganz besonders der thermisch häufig empfindlicheren halogenfreien Flammschutzmittel auf Stickstoff- und Phosphorbasis, gilt.

Aus WO 2010/049531 A1 sind als Beispiel für Elektro- und Elektronikanwendungen sogenannte Power-LEDs auf Basis aromatischer Polyester oder vollständig aromatischer Polyester bekannt, wodurch der Abbau des thermoplastischen Materials durch Hitze oder Strahlung verhindert werden soll. Der Einsatz dieser aromatischen Polyester oder vollständig aromatischen Polyester, insbesondere auf Basis von p-Hydroxybenzoesäure, Terephthalsäure, Hydrochinon oder 4,4'-Bisphenol und gegebenenfalls Isophthalsäure führt zu einer länger anhaltenden Leuchtkraft jener Power-LEDs. Nachteilig an den Polyestern der WO 20101049531 A1 ist jedoch auch hier die hohe Verarbeitungstemperatur in der Schmelze die aufgrund der hohen Schmelzpunkte der beschriebenen Polymere bei Temperaturen von 355°C und höher liegen, ebenso wie die hohen Werkzeugtemperaturen von 175°C und höher. Hohe Verarbeitungs- und Werkzeugtemperaturen schränken die Auswahl weiterer Additive, insbesondere die Auswahl einsetzbarer Flammschutzmittel, ein und erfordern darüber hinaus speziell und kostenaufwändig ausgerüstete Spritzgussmaschinen, insbesondere bei Temperierung und Kühlung der Werkzeuge. Zudem führen hohe Verarbeitungstemperaturen zu erhöhtem Verschleiß der Spritzgusseinheit.

In US - A 4 874 809 werden glasfaserverstärkte Polyester enthaltend Polyethylenterephthalat (PET) und Poly(1,4-cyclohexandimethanolterophthalat) (PCT) beschrieben, denen zur Verringerung der Verzugsneigung zwischen 5 Gew.-% und 50 Gew.-% Glimmer (Mica) zugesetzt wurden. Allerdings wurden dort keine Vorteile hinsichtlich verbesserter Kurzzeitwärmeformbeständigkeit oder aber niedrigerer Verarbeitungstemperaturen aufgezeigt. Als problematisch ist hier auch der obligatorische Einsatz von mindestens 5 Gew.-% Glimmer zu sehen, der das Eigensohaftsprofil, insbesondere hinsichtlich der Mechanik, negativ beeinflussen kann. Gemäß "http://de.wikipedia.org/wiki/Glimmergruppe" wird als Glimmer eine Gruppe von Schichtsilikaten mit der chemischen Zusammensetzung D $G_{2,3}$ [$T_4$ $O_{10}$] $X_2$ bezeichnet, worin

D für 12-fach koordinierte Kationen, insbesondere K, Na, Ca, Ba, Rb, Cs, $NH_4^+$, steht,
G für 6-fach koordinierte Kationen, insbesondere Li, Mg, $Fe^{2+}$, Mn, Zn, Al, $Fe^{3+}$, Cr, V, Ti, steht,
T für 4-fach koordinierte Kationen, insbesondere Si, Al, $Fe^{3+}$, B, Be, steht, und
X für ein Anion, insbesondere $OH^-$, $F^-$, $Cl^-$, $O^{2-}$, $S^{2-}$, steht.

Die Aufgabe der vorliegenden Erfindung bestand deshalb darin, Zusammensetzungen, insbesondere thermoplastische Formmassen, auf Basis thermoplastischer Polyester zur Verfügung zu stellen, die zum einen eine gegenüber PBT und PET verbesserte Kurzzeitwärmeformbeständigkeit aufweisen, andererseits aber mit den für PBT bzw. PET charakteristischen, niedrigen Temperaturen verarbeitbar sind, dadurch weniger Einschränkungen bei der Auswahl von Additiven, insbesondere Flammschutzmitteln, haben und gute mechanische Eigenschaften aufweisen.

Gute mechanische Eigenschaften im Sinne der vorliegenden Erfindung zeichnen sich hinsichtlich der erfindungsgemäß herzustellenden Erzeugnisse durch hohe Werte bei der Izod Schlagzähigkeit, durch hohe Biegefestigkeit und Randfaserdehnung aus. Die Schlagzähigkeit beschreibt die Fähigkeit eines Werkstoffes, Stoßenergie und Schlagenergie zu absorbieren ohne zu brechen. Die Prüfung der Izod Schlagzähigkeit nach ISO 180 ist eine Standard-Methode zur Bestimmung der Schlagzähigkeit von Materialien. Hierbei wird ein Arm zunächst in einer bestimmten Höhe gehalten (= konstante potentielle Energie) und schließlich freigegeben. Der Arm trifft auf die Probe wobei diese bricht. Von der Energie, die durch die Probe absorbiert wird, wird die Aufprallenergie bestimmt. Die Schlagzähigkeit wird berechnet als das Verhältnis aus Schlagarbeit und Probekörperquerschnitt (Maßeinheit $kJ/m^2$). Die Biegefestigkeit in der technischen Mechanik ist ein Wert für eine Biegespannung in einem auf Biegung beanspruchten Bauteil, bei dessen Überschreiten das Versagen durch Bruch des Bauteils eintritt. Sie beschreibt den Widerstand eines Werkstückes, welcher seiner Durchbiegung oder seinem Bruch entgegengesetzt wird. Im Kurzeit-Biegeversuch nach ISO 178 werden balkenförmige Probekörper, vorzugsweise mit den Abmessungen 80 mm · 10 mm · 4mm, an den Enden auf zwei Aufleger gelegt und in der Mitte mit einem Biegestempel belastet.

Aus den ermittelten Kräften und Durchbiegungen werden die Kennwerte für die Biegespannung und die Randfaserdehnung errechnet. (Bodo Carlowitz: Tabellarische Übersicht über die Prüfung von Kunststoffen, 6. Auflage, Giesel-Verlag für Publizität, 1992, S. 16-17).

## Erfindung

Lösung der Aufgabe und Gegenstand der vorliegenden Erfindung sind Zusammensetzungen enthaltend

a) 3 bis 30 Gew.-% Poly(1,4-cyclohexylendimethylenterephthalat) (PCT), wobei der Anteil an PCT bezogen auf die Summe aller enthaltener thermoplastischen Polymere in der Zusammensetzung im Bereich von 5 bis 40 Gew.-%

liegt.

b) 15 bis 91,99 Gew.-% Polyethylenterephthalat (PET),

c) 5 bis 70 Gew.-% Glasfasern, und

d) 0,01 bis 10 Gew.-% Talkum, wobei die einzelnen Komponenten in der Weise miteinander zu kombinieren sind, dass die Summe aller Gewichtsprozente 100 ergibt,

und die zusätzlich zu den Komponenten a), b), c) und d) noch e) wenigstens ein Flammschutzmittel zu 1 bis 50 Gew.-%, enthalten, wobei wenigstens eine der übrigen Komponenten soweit zu reduzieren ist, dass die Summe aller Gewichtsprozente 100 ergibt und als Flammschutzmittel halogenfreie Flammschutzmittel auf Basis von organischen oder anorganischen Phosphorverbindungen eingesetzt werden.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind. Ferner sei zur Klarstellung angemerkt, dass die Zusammensetzungen in bevorzugter Ausführungsform Mischungen der Komponenten a), b), c) und d) sowie aus diesen Mischungen mittels Umarbeitungsverfahren, bevorzugt mittels wenigstens eines Misch- oder Knetapparats, herzustellende thermoplastische Formmassen aber auch aus diesen wiederum, insbesondere durch Extrusion oder Spritzguss, herzustellende Erzeugnisse sein können. Sofern nicht anders angegeben beziehen sich alle Angaben auf Raumtemperatur (RT) = 23 + / - 2 °C und auf Normaldruck = 1 bar.

Die Zubereitung der erfindungsgemäßen Zusammensetzungen für eine weitere Nutzung erfolgt durch Mischen der als Edukte einzusetzenden Komponenten a), b), c) und d) in wenigsten einem Mischwerkzeug. Hierdurch werden als Zwischenprodukte, auf den erfindungsgemäßen Zusammensetzungen basierende, Formmassen erhalten. Diese Formmassen können entweder ausschließlich aus den Komponenten a), b), c) und d) bestehen, oder aber zusätzlich zu den Komponenten a), b), c) und d) noch weitere Komponenten enthalten. In diesem Fall sind die Komponenten a), b), c) und d) im Rahmen der angegebenen Mengenbereiche so zu variieren, dass die Summe aller Gewichtsprozente stets 100 ergibt.

Im Falle thermoplastischer Formmassen und daraus herzustellender Erzeugnisse liegt der Anteil der erfindungsgemäßen Zusammensetzungen in diesen bevorzugt im Bereich von 50 bis 100 Gew.-% vor, wobei es sich bei den übrigen Bestandteilen um Zusatzstoffe handelt, die der Fachmann entsprechend dem späteren Einsatz der Erzeugnisse auswählt, bevorzugt aus wenigstens eine der im Folgenden definierten Komponenten e) bis h).

**Bevorzugte Ausführungsformen der Erfindung**

Bevorzugter Gegenstand der vorliegenden Erfindung sind Zusammensetzungen, insbesondere thermoplastische Formmassen, enthaltend

a) 5 bis 25 Gew.-%, besonders bevorzugt 10 bis 20 Gew.-% Poly(1,4-cyclohexylendimethylenterephthalat) (PCT), wobei der Anteil an PCT bezogen auf die Summe aller enthaltener thermoplastischen Polymere in der Zusammensetzung im Bereich von 7 bis 30 Gew.-%, besonders bevorzugt bei 10 bis 25 Gew.-% liegt,

b) 20 bis 70 Gew.-%, besonders bevorzugt 30 bis 60 Gew.-% Polyethylenterephthalat (PET),

c) 10 bis 45 Gew.-%, besonders bevorzugt 15 bis 35 Gew.-% Glasfasern, und

d) 0,05 bis 5 Gew.-%, besonders bevorzugt 0,1 bis 2 Gew.-% Talkum, bevorzugt mikrokristallines Talkum,

wobei die einzelnen Komponenten in der Weise miteinander zu kombinieren sind, dass die Summe aller Gewichtsprozente 100 ergibt.

In einer bevorzugten Ausführungsform betrifft die vorliegende Erfindung Zusammensetzungen, insbesondere thermoplastischen Formmassen, enthaltend zusätzlich zu den Komponenten a), b), c) und d) noch e) bevorzugt 5 bis 30 Gew.-%, ganz besonders bevorzugt 10 bis 20 Gew.-% wenigstens des Flammschutzmittels, wobei wenigstens eine der übrigen Komponenten soweit zu reduzieren ist, dass die Summe aller Gewichtsprozente 100 ergibt.

In einer bevorzugten Ausführungsform enthalten die erfindungsgemäßen Zusammensetzungen, insbesondere thermoplastischen Formmassen, zusätzlich zu den Komponenten a) bis e) oder anstelle der Komponente e) noch f) wenigstens ein Additiv mit mindestens zwei Epoxygruppen pro Molekül, bevorzugt 0,01 bis 10 Gew.-%, besonders bevorzugt 0,1 bis 7 Gew.-%, ganz besonders bevorzugt 0,5 bis 5 Gew.-% wenigstens eines Additivs mit mindestens zwei Epoxygruppen pro Molekül, wobei wenigstens eine der übrigen Komponenten soweit zu reduzieren ist, dass die

Summe aller Gewichtsprozente 100 ergibt.

In einer bevorzugten Ausführungsform enthalten die erfindungsgemäßen Zusammensetzungen, insbesondere thermoplastischen Formmassen, zusätzlich zu den Komponenten a) bis f) oder anstelle der Komponenten e) und/oder f) noch g) Titandioxid, bevorzugt 0,01 bis 30 Gew.%, besonders bevorzugt 1 bis 25 Gew.-%, ganz besonders bevorzugt 5 bis 20 Gew.-% Titandioxid, wobei wenigstens eine der übrigen Komponenten soweit zu reduzieren ist, dass die Summe aller Gewichtsprozente 100 ergibt.

In einer bevorzugten Ausführungsform enthalten die erfindungsgemäßen Zusammensetzungen, insbesondere thermoplastischen Formmassen, zusätzlich zu den Komponenten a) bis g) oder anstelle der Komponenten e) und/oder f) und/oder g) noch h) wenigstens ein sonstiges zu den Komponenten c) bis g) unterschiedliches Additiv, bevorzugt 0,01 bis 15 Gew.-%, besonders bevorzugt 0,1 bis 10 Gew.-%, ganz besonders bevorzugt 0,1 bis 5 Gew.-% wenigstens eines sonstigen, von den Komponenten c) bis g) unterschiedlichen Additivs, wobei wenigstens eine der Komponenten a) bis g) soweit zu reduzieren ist, dass die Summe aller Gewichtsprozente 100 ergibt.

**Komponente a)**

Erfindungsgemäß wird ein Blend aus Komponente a) PCT (CAS No. 24936-69-4) und Komponente b) PET eingesetzt. Bevorzugt einzusetzendes PCT weist eine intrinsische Viskosität im Bereich von ca. 30 $cm^3/g$ bis 150 $cm^3/g$, besonders bevorzugt im Bereich von 40 $cm^3/g$ bis 130 $cm^3/g$, insbesondere bevorzugt im Bereich von 60 $cm^3/g$ bis 120 $cm^3/g$, jeweils gemessen in Analogie zu IS01628-1 in Phenol/o-Dichlorbenzol (1:1 Gew.-Teile) bei 25°C in einem Ubbelohde Viskosimeter. Die intrinsische Viskosität [η] wird auch Grenzviskositätszahl oder Staudinger Index genannt, da sie erstens eine Stoffkonstante ist und zweitens in einem Zusammenhang mit dem Molekulargewicht steht. Sie gibt an, wie die Viskosität des Lösungsmittels durch den gelösten Stoff beeinflusst wird. Zur Bestimmung der intrinsischen Viskosität wird die folgende Definition verwendet:

$$[\eta] = \lim_{c \to 0} \frac{\eta_{sp}}{c} = \lim_{c \to 0} \frac{1}{c} \ln\left(\frac{\eta}{\eta_0}\right)$$

wobei c die Konzentration des gelösten Stoffs in g/ml, $\eta_0$ die Viskosität des reinen Lösungsmittels und $\eta_{sp} = \frac{\eta}{\eta_0} - 1$ die spezifische Viskosität ist. Zur Messung der Viskosität wird das Material auf einen Feuchtegehalt von maximal 0.02%, ermittelt mittels der dem Fachmann bekannten Karl Fischer Methode, in einem handelsüblichen Umlufttrockner bei 120°C getrocknet (siehe: http://de.wikipedia.org/wiki/Karl-Fischer-Verfahren).

**Komponente b)**

Das als Komponente b) einzusetzende PET (CAS No. 25038-59-9) ist ein Reaktionsprodukt aus aromatischen Dicarbonsäuren oder ihren reaktionsfähigen Derivaten, bevorzugt Dimethylestern oder Anhydriden, und aliphatischen, cycloaliphatischen oder araliphatischen Diolen und Mischungen dieser Edukte. PET läßt sich aus Terephthalsäure (oder ihren reaktionsfähigen Derivaten) und den jeweiligen aliphatischen Diolen mit 2 bzw. 4 C-Atomen nach bekannten Methoden herstellen (Kunststoff-Handbuch, Bd. VIII, S. 695 - 703, Karl-Hanser-Verlag, München 1973).

Bevorzugt als Komponente b) einzusetzendes PET enthält mindestens 80 Mol-%, vorzugsweise mindestens 90 Mol-%, bezogen auf die Dicarbonsäure, Terephthalsäurereste und mindestens 80 Mol-%, vorzugsweise mindestens 90 Mol-%, bezogen auf die Diolkomponente, Ethylenglykolreste.

Bevorzugt als Komponente b) einzusetzendes PET kann neben Terephthalsäureresten bis zu 20 Mol-% Reste anderer aromatische Dicarbonsäuren mit 8 bis 14 C-Atomen oder Reste aliphatischer Dicarbonsäuren mit 4 bis 12 C-Atomen enthalten, bevorzugt Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, oder Cyclohexandicarbonsäure.

Bevorzugt als Komponente b) einzusetzendes PET kann neben Ethylen- bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten. Bevorzugt sind Reste von Propandioi-1,3, 2-Ethylpropandiol-1,3, Neopentylglykol, Pentan-diol-1,5, Hexandiol-1.6, 3-Methylpentandiol-2,4, 2-Methylpentandiol-2,4, 2,2,4-Trimethylpentandiol-1,3, 2,2,4-Trimethylpentandiol-1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclehexyl)-propan, 2,4-Dihydroxy-1,1,3,3-tetramethyl-cyclobutan, 2,2-Bis-(3-β-hydroxyethoxyphenyl)-propan oder 2,2-Bis-(4-hydroxypropoxyphenyl)-propan (DE-A 24 07 674 (= US-A 4 035 958), DE-A 24 07 776, DE-A 27 15 932 (=US-A 4 176 224)).

In einer Ausführungsform kann das erfindungsgemäß als Komponente b) einzusetzende PET durch Einbau relativ kleiner Mengen 3- oder 4-wertiger Alkohole oder 3- oder 4-basischer Carbonsäuren, wie sie z.B. in der DE-A 19 00 270 (= US-A 3 692 744) beschrieben sind, verzweigt werden. Bevorzugte Verzweigungsmittel sind Trimesinsäure, Trimellitsäure, Trimethylolethan und Trimethylolpropan und Pentaerythrit.

Das erfindungsgemäß einzusetzende PET besitzt bevorzugt eine intrinsische Viskosität im Bereich von ca. 30 $cm^3/g$ bis 150 $cm^3/g$, besonders bevorzugt im Bereich von 40 $cm^3/g$ bis 130 $cm^3/g$, insbesondere bevorzugt im Bereich von 50 $cm^3/g$ bis 100 $cm^3/g$ jeweils gemessen in Analogie zu ISO1628-1 in Phenol/o-Dichlorbenzol (1:1 Gew.-Teile) bei 25°C mittels eines Ubbelohde Viskosimeters.

Die Polyester der Komponente a) PCT und der Komponente b) PET können in einer Ausführungsform gegebenenfalls auch im Gemisch mit anderen Polyestern, insbesondere PBT, und/oder weiteren Polymeren eingesetzt werden. Die Herstellung von Polyestern der Komponenten a) und b) wird beispielsweise auch in Ullmanns Enzyclopädie der technischen Chemie, 4. Auflage, Band 19, Seiten 65 ff, Verlag Chemie, Weinheim 1980, beschrieben.

**Komponente c)**

Gemäß "http://de.wikipedia.org/wiki/Faser-Kunststoff-Verburid" unterscheidet man geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden in der Spritzgusstechnik eingesetzt und können direkt in einem Extruder verarbeitet werden. Langfasern können ebenfalls noch in Extrudern verarbeitet werden. Sie finden in großem Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200 μm liegt.

Erfindungsgemäß bevorzugt werden für Komponente c) geschnittene Langglasfasern mit einer Ausgangslänge im Bereich von 1 bis 50 mm, besonders bevorzugt im Bereich von 1 bis 10 mm, ganz besonders bevorzugt im Bereich von 2 bis 7 mm eingesetzt. Die Glasfasern der Komponente c) können bedingt durch die Verarbeitung zur Formmasse oder zum Erzeugnis in der Formmasse oder im Erzeugnis einen kleineren d97 bzw. d50-Wert aufweisen, als die ursprünglich eingesetzten Glasfasern. So liegt der arithmetische Mittelwert der Glasfaserlänge nach der Verarbeitung häufig nur noch im Bereich von 150 μm und 300 μm.

Die Ermittlung der Glasfaserlänge und Glasfaserlängenverteilung erfolgt im Rahmen der vorliegenden Erfindung im Falle verarbeiteter Glasfasern in Analogie zur ISO 22314, welche zunächst eine Veraschung der Proben bei 625 °C vorsieht. Anschließend wird die Asche auf einen mit demineralisiertem Wasser bedeckten Objektträger in einer geeigneten Kristallisierschale gegeben und die Asche ohne Wirkung von mechanischen Kräften im Ultraschallbad verteilt. Der nächste Schritt sieht die Trocknung im Ofen bei 130 °C vor und anschließend erfolgt mit Hilfe von lichtmikroskopischen Aufnahmen die Ermittlung der Glasfaserlänge. Dazu werden von drei Aufnahmen mindestens 100 Glasfasern ausgemessen, so dass insgesamt 300 Glasfasern zur Ermittlung der Länge herangezogen werden. Die Glasfaserlänge kann dabei entweder als arithmetischer Mittelwert $l_n$ nach Gleichung

$$l_n = \frac{1}{n} \cdot \sum_{i}^{n} l_i$$

mit $l_i$ = Länge der iten Faser und n = Anzahl der gemessenen Fasern, berechnet und in geeigneter Weise als Histogramm dargestellt oder bei einer angenommenen Normalverteilung der gemessenen Glasfaserlängen $l$ mit Hilfe der Gauß-Funktion nach Gleichung

$$f(l) = \frac{1}{\sqrt{2\pi} \cdot \sigma} \cdot e^{-\frac{1}{2}\left(\frac{l-l_c}{\sigma}\right)^2}$$

Bestimmt werden. Dabei sind $l_c$ und $\sigma$ spezielle Kennwerte der Normalverteilung; $l_c$ ist der mittlere Wert und $\sigma$ die Standardabweichung (siehe: M. Schoßig, Schädigungsmechanismen in faserverstärkten Kunststoffen, 1, 2011, Vieweg und Teubner Verlag, Seite 35, ISBN 978-3-8348-1483-8). Nicht in eine Kunststoffmatrix eingebundene Glasfasern werden hinsichtlich ihrer Längen gemäß obiger Methoden jedoch ohne die Aufbereitung durch Veraschung und Abtrennung von der Asche analysiert.

Die Glasfasern können bedingt durch die Verarbeitung zur Formmasse bzw. dem daraus herzustellenden Erzeugnis in der Formmasse bzw. im Erzeugnis in Bezug auf ihre Länge einen kleineren d97- bzw. d50-Wert aufweisen, als die ursprünglich eingesetzten Glasfasern.

Die erfindungsgemäß als Komponente c) einzusetzenden Glasfasern (CAS No. 65997-17-3) haben bevorzugt einen mittleren Faserdurchmesser im Bereich von 7 bis 18 μm, besonders bevorzugt im Bereich von 9 bis 15 μm, der durch wenigstens eine dem Fachmann zur Verfügung stehende Möglichkeit zu ermitteln ist, insbesondere zu ermitteln durch μ-Röntgen-Computertomographie in Analogie zu "Quantitative Messung von Faserlängen und -verteilung in faserverstärkten Kunststoffteilen mittels μ-Röntgen-Computertomographie", J.KASTNER, et al. DGZfP-Jahrestagung 2007 - Vortrag 47. Die als Komponente c) einzusetzenden Glasfasern werden als Endlosfasern oder als geschnittene oder gemahlene Glasfasern zugesetzt.

Die Fasern werden bevorzugt mit einem geeigneten Schlichtesystem und einem Haftvermittler bzw. Haftvermittlersystem, besonders bevorzugt auf Silanbasis, ausgerüstet.

Ganz besonders bevorzugte Haftvermittler auf Silanbasis, insbesondere für die Vorbehandlung der Glasfasern, sind Silanverbindungen der allgemeinen Formel (I)

$$(X\text{-}(CH_2)q)_k\text{-}Si\text{-}(O\text{-}C_rH_{2r+1})_{4-k} \qquad (I)$$

in der die Substituenten folgende Bedeutung haben:

X: $NH_2$-, HO-,

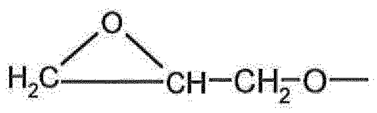

q: eine ganze Zahl von 2 bis 10, bevorzugt 3 bis 4,

r: eine ganze Zahl von 1 bis 5, bevorzugt 1 bis 2,

k: eine ganze Zahl von 1 bis 3, bevorzugt 1.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Glasfasern werden die Silanverbindungen bevorzugt in Mengen von 0,05 bis 2 Gew.-%, besonders bevorzugt 0,25 bis 1,5 Gew.-% und insbesondere 0,5 bis 1 Gew.-% bezogen auf die Glasfasern zur Oberflächenbeschichtung eingesetzt.

Die Glasfasern können bedingt durch die Verarbeitung zur Formmasse bzw. dem daraus herzustellenden Erzeugnis in der Formmasse bzw. im Erzeugnis einen kleineren d97-bzw. d50-Wert aufweisen, als die ursprünglich eingesetzten Glasfasern. Die Glasfasern können bedingt durch die Verarbeitung zur Formmasse bzw. Formkörper in der Formmasse bzw. im Formkörper kürzere Längenverteilungen als ursprünglich eingesetzt aufweisen.

**Komponente d)**

Erfindungsgemäß wird als Komponente d) Talkum, bevorzugt mikrokristallines Talkum, eingesetzt. Talkum (CAS No. 14807-96-6), auch als Talk bezeichnet, ist ein Schichtsilikat mit der chemischen Zusammensetzung $Mg_3[Si_4O_{10}(OH)_2]$, das je nach Modifikation als Talk-1A im triklinen oder als Talk-2M im monoklinen Kristallsystem kristallisiert (http://de.wikipedia.org/wiki/Talkum) .

Mikrokristalliner Talk im Sinne der vorliegenden Erfindung wird in WO 2014/001158 A1 beschrieben, deren Inhalt von der vorliegenden Offenbarung vollumfänglich umfasst wird. In einer Ausführungsform der vorliegenden Erfindung wird mikrokristalliner Talk mit einer mittleren Teilchengröße d50 bestimmt nach SediGraph im Bereich von 0,5 bis 10 μm eingesetzt, bevorzugt im Bereich von 1,0 bis 7,5 μm, besonders bevorzugt im Bereich von 1,5 bis 5,0 μm und ganz besonders bevorzugt im Bereich von 1,8 bis 4,5 μm.

Wie in WO 2014/001158 A1 beschrieben, erfolgt im Rahmen der vorliegenden Erfindung die Teilchengrößenbestimmung des erfindungsgemäß einzusetzenden Talks durch Sedimentation in einem vollständig dispergierten Zustand in einem wässrigen Medium mit Hilfe eines "Sedigraph 5100" wie er von Micrometrics Instruments Corporation, Norcross, Georgia, USA, geliefert wird. Der Sedigraph 5100 liefert Messungen und einen Plot vom kumulativen Gewichtsprozentsatz von Teilchen mit einer Größe, die in der Technik als "Äquivalenter Kugeldurchmesser" (esd) bezeichnet wird, abzüglich der gegebenen esd-Werte. Die mittlere Teilchengröße d50 ist der aus der Teilchen-esd ermittelte Wert, zu dem 50 Gew.-% der Teilchen einen äquivalenten Kugeldurchmesser kleiner als diesen d50 Wert aufweisen. Die zugrunde liegende Norm ist ISO 13317-3.

In einer Ausführungsform ist mikrokristalliner Talk über die BET Oberfläche definiert. Erfindungsgemäß einzusetzender mikrokristalliner Talk weist bevorzugt eine BET Oberfläche, zu bestimmen in Analogie zu DIN ISO 9277, im Bereich von 5 bis 25 $m^2 \cdot g^{-1}$ auf, besonders bevorzugt im Bereich von 10 bis 18 $m^2 \cdot g^{-1}$, ganz besonders bevorzugt im Bereich von 12 bis 15 $m^2 \bullet g^{-1}$.

Erfindungsgemäß ganz besonders bevorzugt einzusetzendes mikrokristallines Talkum kann beispielsweise als Mistron® R10 von Imerys Talc Group, Toulouse, Frankreich (Rio Tinto Group) mit einer mittleren Teilchengröße nach ISO 13317-3 d50 = 1,9 $\mu$m und einer BET nach DIN ISO 9277 von 15 $m^2 \bullet g^{-1}$, oder als V3902 von Luzenac Europe SAS (heute ebenfalls Imerys Talc Group) mit einer d50 nach ISO 13373-3 von 2,2 $\mu$m und einer BET von 14,5 $m^2 \bullet g^{-1}$ bezogen werden.

**Komponente e)**

Erfindungsgemäß wird als Komponente e) wenigstens ein handelsübliches halogenfreies Flammschutzmittel auf Basis von organischen oder anorgansichen Phosphorverbindungen eingesetzt.

Als Phosphorverbindungen sind die Phosphorverbindungen gemäß WO A 98/17720 (= US-A 6 538 024) geeignet, bevorzugt Metallphosphinate, insbesondere Aluminiumphosphinat oder Zinkphosphinat, Metallphosphonate, insbesondere Aluminiumphosphonat, Calciumphosphonat oder Zinkphosphonat sowie die entsprechenden Hydrate der Metallphosphonate, außerdem Derivate der 9,10-Dihydro-9-oxa-10-phosphaphenanthren-10-oxide (DOPO-Derivate), Triphenylphosphat (TPP), Resorcinol-bis-(diphenyiphosphat) (RDP), einschließlich Oligomere sowie Bisphenol-A-bis-diphenylphosphat (BDP) einschließlich Oligomere, Polyphosphonate (wie z.B. Nofia® HM1100 der Fa. FRX Polymers, Chelmsford, USA) ferner Zink-bis(diethylphosphinat), Aluminium-tris(diethylphosphinat), Melaminphosphat, Melaminpyrophosphat, Melaminpolyphosphat, Melamin-poly(aluminiumphosphat), Melamin-poly(zinkphosphat) oder Phenoxyphosphazenoligomere und deren Mischungen.

Unter den halogenfreien Flammschutzmitteln werden besonders bevorzugt Aluminium-tris(diethylphosphinat) (CAS No. 225789-38-8), in Kombination mit Melaminpolyphosphat (CAS No. 41583-09-9), (z.B. Melapur® 200/70 der BASF SE, Ludwigshafen, Deutschland) und/oder Melamincyanurat (CAS No. 37640-57-6), (z.B. Melapur® MC25 der BASF SE, Ludwigshafen, Deutschland) und/oder Phenoxyphosphazenoligomere (CAS No. 28212-48-8), (z.B. Rabitle® FP110 der Fushimi Pharmaceutical Co. Ltd, Kagawa, Japan) eingesetzt.

Insbesondere ganz besonders bevorzugt wird als Flammschutzmittel Aluminium-tris(diethylphosphinat) eingesetzt, das als Exolit® OP1240 (CAS No 225789-38-8) von der Clariant International Ltd, Muttenz, Schweiz, vertrieben wird.

**Komponente f)**

Erfindungsgemäß wird als Komponente f) wenigstens ein Additiv mit mindestens zwei Epoxygruppen pro Molekül eingesetzt. Bevorzugte Additive der Komponente f) werden aus der Reihe der Bisphenol-Diglycidylether ausgewählt. Bisphenol-Diglycidylether werden durch Reaktionen von Bisphenol-Derivaten mit Epichlorhydrin erhalten. Bevorzugte Bisphenol-Komponenten sind auszuwählen aus der Reihe 2,2-Bis(4-hydroxyphenyl)propan (Bisphenol A), 1,1-Bis(4-hydroxyphenyl)-1-phenyl-ethan (Bisphenol AP), Bis(4-hydroxyphenyl)sulfon (Bisphenol S) und Bis(4-hydroxydiphenyl)methan (Bisphenol F), wobei Diglycidylether auf Basis Bisphenol-A besonders bevorzugt sind. Ganz besonders bevorzugt sind feste Bisphenol-A-Diglycidylether (CAS No. 1675-54-3) mit einem Erweichungspunkt oberhalb von 60°C wie z.B. das Araldite® GT7071 der Fa. Huntsman, Everberg, Belgien.

**Komponente g)**

Das als Komponente g) einzusetzende Titandioxid (CAS No. 13463-67-7), hat bevorzugt eine mittlere Teilchengröße im Bereich von 90 nm bis 2000 nm (d50), wobei die Teilchengrößenbestimmung nach wenigstens einem dem Fachmann bekannten Verfahren, insbesondere mittels Debye-Scherrer Verfahren (siehe: http://de.wikipedia.org/wiki/Debye-Scherrer-Verfahren) oder Elektronenmikroskopie (TEM) (siehe: http://de.wikipedia.org/wiki/Transmissionselektronenmikroskop) mit quantitativer Bildverarbeitung bestimmt wird.

Für das erfindungsgemäß als Komponente g) einzusetzende Titandioxid kommen Titandioxid-Pigmente in Frage, deren Grundkörper nach dem Sulfat (SP)- oder Chlorid (CP)-Verfahren hergestellt sein können und die bevorzugt Anatas (CAS No. 1317-70-0), und/oder Rutilstruktur (CAS-No. 1317-80-2), besonders bevorzugt Rutilstruktur haben. Der Grundkörper muss nicht stabilisiert sein, jedoch ist eine spezielle Stabilisierung bevorzugt: beim CP-Grundkörper

durch eine Al- Dotierung von 0,3-3,0 Gew.-% (gerechnet als $Al_2O_3$) und einen Sauerstoffüberschuss in der Gasphase bei der Oxidation des Titantetrachlorids zu Titandioxid von mindestens 2 % ; beim SP-Grundkörper durch eine Dotierung bevorzugt mit Al, Sb, Nb oder Zn. Besonders bevorzugt, um eine hinreichend hohe Helligkeit der aus den Zusammensetzungen herzustellenden Erzeugnisse zu erhalten, ist eine "leichte" Stabilisierung mit Al bevorzugt, bzw. bei höheren Al-Dotierungsmengen eine Kompensation mit Antimon. Bei der Verwendung von Titandioxid als Weißpigment in Farben und Lacken, Kunststoffen usw, ist bekannt, dass durch UV-Absorption erzeugte unerwünschte fotokatalytische Reaktionen zur Zersetzung des pigmentierten Materials führen. Dabei absorbieren Titandioxid-Pigmente im nahen ultravioletten Bereich Licht, so dass Elektron-Loch-Paare entstehen, welche hochreaktive Radikale auf der Titandioxid-Oberfläche erzeugen. Die gebildeten Radikale haben in organischen Medien einen Bindemittelabbau zur Folge. Erfindungsgemäß bevorzugt wird zur Erniedrigung der Fotoaktivität des Titandioxids dieses anorganisch nachbehandelt, besonders bevorzugt mit Oxiden von Si und / oder Al und/oder Zr und / oder durch den Einsatz von Sn-Verbindungen.

Bevorzugt ist die Oberfläche von pigmentärem Titandioxid mit amorphen Ausfällungen von Oxidhydraten der Verbindungen $SiO_2$ und / oder $Al_2O_3$ und / oder Zirkonoxid bedeckt. Die $Al_2O_3$-Hülle erleichtert die Pigmentdispergierung in der Polymermartrix, die $SiO_2$-Hülle erschwert den Ladungsaustausch an der Pigmentoberfläche und verhindert dadurch den Polymerabbau.

Erfindungsgemäß wird das Titandioxid bevorzugt mit hydrophilen und/oder hydrophoben organischen Beschichtungen versehen, insbesondere mit Siloxanen oder Polyalkoholen.

Erfindungsgemäß als Komponente g) einzusetzendes Titandioxid weist bevorzugt eine mittlere Teilchengröße im Bereich von 90 nm bis 2000 nm, bevorzugt im Bereich von 200 nm bis 800 nm auf, wobei sich diese Angaben auf die mittlere Teilchengröße auf den d50-Wert beziehen. Erfindungsgemäß wird die mittlere Teilchengröße wie oben beschrieben bestimmt.

Kommerziell erhältliche Produkte sind beispielsweise Kronos® 2230, Kronos® 2225 und Kronos® vlp7000 der Fa. Kronos, Dallas, USA.

**Komponente h)**

Erfindungsgemäß kann als Komponente h) wenigstens ein Additiv eingesetzt werden, das sich von den Komponenten c), d), e), f) und g) unterscheidet.

Übliche Additive der Komponente h) sind bevorzugt Stabilisatoren, Entformungsmittel, UV-Stabilisatoren, Thermostabilisatoren, Gammastrahlenstabilisatoren, Antistatika, Fließhilfsmittel, Flammschutzmittel, Elastomermodifikatoren, Säurefänger, Emulgatoren, Nukleierungsmittel, Weichmacher, Gleitmittel, Farbstoffe oder Pigmente. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren werden bevorzugt sterisch gehinderte Phenole oder Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen oder deren Mischungen eingesetzt.

Bevorzugte Phosphite werden ausgewählt aus der Gruppe Tris(2,4-ditert-butylphenyl)phosphit (Irgafos® 168, BASF SE, CAS 31570-04-4), Bis(2,4-di-tert-butylphenyl)pentaerythritol-diphosphit (Ultranox® 626, Chemtura, CAS 26741-53-7), Bis(2,6-di-ter-butyl-4-methylphenyl)pentaerythritol-diphosphit (ADK Stab PEP-36, Adeka, CAS 80693-00-1), Bis(2,4-dicumylphenyl)pentaerythritol-diphosphit (Doverphos® S-9228, Dover Chemical Corporation, CAS 154862-43-8), Tris(nonylphenyl)phosphit (Irgafos® TNPP, BASF SE, CAS 26523-78-4), (2,4,6-tri-t-butylphenol)2-butyl-2-ethyl-1,3-propanediol-phosphit (Ultranox® 641, Chemtura, CAS 161717-32-4) und Hostanox® P-EPQ.

Insbesondere bevorzugt wird als Phosphitstabilisator wenigstens Hostanox® P-EPQ (CAS No. 119345-01-6) der Clariant International Ltd., Muttenz, Schweiz eingesetzt. Dieses enthält das erfindungsgemäß insbesondere ganz besonders bevorzugt als Komponente d) einzusetzende Tetrakis(2,4-di-tert-butylphenyl)-1,1-biphenyl-4,4'-diylbisphosphonit (CAS No. 38613-77-3).

Als Säurefänger werden bevorzugt Hydrotalcit, Kreide, Zinkstannat oder Böhmit eingesetzt.

Als bevorzugte Entformungsmittel wird wenigstens eines ausgewählt aus der Gruppe Esterwachs(e), Pentaeritrytoltetrastearat (PETS), langkettige Fettsäuren, Salz(e) der langkettigen Fettsäuren, Amidderivat(e) der langkettigen Fettsäuren, Montanwachse sowie niedermolekulare Polyethylen- bzw. Polypropylenwachs(e) und Ethylen Homopolymer Wachs(e).

Bevorzugte langkettige Fettsäuren sind Stearinsäure oder Behensäure. Bevorzugte Salze langkettiger Fettsäuren sind Calciumstearat oder Zinkstearat. Bevorzugtes Amidderivat langkettiger Fettsäuren ist Ethylen-bis-stearylamid, (CAS No. 130-10-5). Bevorzugte Montanwachse sind Mischungen aus geradkettigen, gesättigten Carbonsäuren mit Kettenlängen von 28 bis 32 C-Atomen.

Als Farbstoffe oder Pigmente werden unabhängig von dem Titandioxid der Komponente c) weitere Farbstoffe bzw. Pigmente eingesetzt, z.B. um im Falle eines optoelektronischen Erzeugnisses dem von diesem auszusendenden

Licht einen Farbton zu geben, oder um das zu emittierende Licht mittels eines optischen Aufhellers zu verbessern.

Als Nukleierungsmittel werden bevorzugt Natrium- oder Calciumphenylphosphinat, Aluminiumoxid (CAS No. 1344-28-1) oder Siliziumdioxid eingesetzt.

Als Weichmacher werden bevorzugt Phthalsäuredioctylester, Phthalsäuredibenzylester, Phthalsäurebutylbenzylester, Kohlenwasserstofföle oder N-(n-Butyl)benzolsulfonamid eingesetzt.

Als Elastomermodifikator einzusetzendes Additiv wird bevorzugt eines oder mehrere Pfropfpofymerisat(e) E von

E.1 5 bis 95 Gew.-%, vorzugsweise 30 bis 90 Gew.-%, wenigstens eines Vinylmonomeren auf

E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C eingesetzt.

Die Pfropfgrundlage E.2 hat im Allgemeinen eine mittlere Teilchengröße ($d_{50}$-Wert) von 0,05 bis 10 $\mu$m, vorzugsweise 0,1 bis 5 $\mu$m, besonders bevorzugt 0,2 bis 1 $\mu$m.

Monomere E.1 sind vorzugsweise Gemische aus

E.1.1 50 bis 99 Gew.-% Vinylaromaten und/oder kernsubstituierten Vinylaromaten (wie beispielsweise Styrol, $\alpha$-Methylstyrol, p-Methylstyrol, p-Chlorstyrol) und/oder Methacrylsäure-($C_1$-$C_8$)-Alkylester (wie z.B. Methylmethacrylat, Ethylmethacrylat) und/oder Glycidyl(meth)acrylat und

E.1.2 1 bis 50 Gew.-% Vinylcyanide (ungesättigte Nitrile wie Acrylnitril und Methacrylnitril) und/oder (Meth)Acrylsäure-($C_1$-$C_8$)-Alkylester (wie z.B. Methylmethacrylat, n-Butylacrylat, t-Butylacrylat) und/oder Glycidylmethacrylat und/oder Derivate (wie Anhydride und Imide) ungesättigter Carbonsäuren (beispielsweise Maleinsäureanhydrid und N-Phenyl-Maleinimid).

Bevorzugte Monomere E.1.1 sind ausgewählt aus mindestens einem der Monomere Styrol, $\alpha$-Methylstyrol, Glycidylmethacrylat und Methylmethacrylat, bevorzugte Monomere E.1.2 sind ausgewählt aus mindestens einem der Monomere Acrylnitril, Maleinsäureanhydrid und Methylmethacrylat.

Besonders bevorzugte Monomere sind E.1.1 Styrol und E.1.2 Acrylnitril.

Für die in den Elastomermodifikatoren einzusetztenden Pfropfpolymerisate geeignete Pfropfgrundlagen E.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen E.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß E.1.1 und E.1.2), mit der Maßgabe, dass die Glasübergangstemperatur der Komponente E.2 unterhalb <10°C, vorzugsweise <0°C, besonders bevorzugt <-10°C liegt.

Besonders bevorzugt ist als Pfropfgrundlage E.2. reiner Polybutadienkautschuk.

Besonders bevorzugte Polymerisate E sind ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage E.2 beträgt mindestens 30 Gew.-%, vorzugsweise mindestens 40 Gew.-% (in Toluol gemessen). ABS bedeutet Acrylnitril-Butadien-Styrol-Copolymerisat mit der CAS- Nummer 9003-56-9 und ist ein synthetisches Terpolymer aus den drei unterschiedlichen Monomerarten Acrylnitril, 1,3-Butadien und Styrol. Es gehört zu den amorphen Thermoplasten. Die Mengenverhältnisse können dabei variieren von 15-35 % Acrylnitril, 5-30 % Butadien und 40-60 % Styrol.

Die Elastomermodifikatoren bzw. Pfropfcopolymerisate E werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten E auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke basieren auf Propfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren sind. Zu den bevorzugten polymerisierbaren Acrylsäureestern gehören $C_1$-$C_8$-Alkylester, bevorzugt Methyl-, Ethyl-, Butyl-, n-Octyl- und 2-Ethylhexylester; Halogenalkylester, vorzugsweise Halogen-$C_1$-$C_8$-alkyl-ester, insbesondere bevorzugt Chlorethylacrylat sowie Mischungen dieser Monomeren.

Zur Vernetzung können Monomere mit mehr als einer polymerisierbaren Doppelbindung copolymerisiert werden. Bevorzugte vernetzende Monomere sind Ester ungesättigter Monocarbonsäuren mit 3 bis 8 C-Atomen und ungesättigter einwertiger Alkohole mit 3 bis 12 C-Atomen, oder Ester gesättigter Polyole mit 2 bis 4 OH-Gruppen und 2 bis 20 C-Atomen, insbesondere Ethylenglykoldimethacrylat, Allylmethacrylat; mehrfach ungesättigte heterocyclische Verbindungen, insbesondere Trivinyl- und Triallylcyanurat; polyfunktionelle Vinylverbindungen, insbesondere Di- und Trivinylbenzole, aber auch Triallylphosphat oder Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind insbesondere Acrylnitril, Styrol, $\alpha$-Methylstyrol, Acrylamid, Vinyl-$C_1$-$C_6$-alkylether, Methylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere geeignete Pfropfgrundlagen gemäß E.2 sind Silikonkautschuke mit pfropfaktiven Stellen, wie sie in den DE-A 3 704 657 (= US-A 4 859 740), DE-A 3 704 655 (= US 4 861 831), DE-A 3 631 540 (= US-A 4 806 593) und DE-A 3 631 539 (= US-A 4 812 515) beschrieben werden.

Unabhängig von der Komponente c) können als Additive zusätzliche Füll- und/oder Verstärkungsstoffe in den erfindungsgemäßen Zusammensetzungen enthalten sein.

Bevorzugt wird aber auch eine Mischung aus zwei oder mehr unterschiedlichen Füllstoffen und/oder Verstärkungsstoffen, insbesondere auf Basis von Glimmer, Silikat, Quarz, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffe auf der Basis von Kohlenstofffasern eingesetzt. Bevorzugt werden mineralische teilchenförmige Füllstoffe auf der Basis von Glimmer, Silikat, Quarz, Wollastonit, Kaolin, amorphe Kieselsäuren, Magnesiumcarbonat, Kreide, Feldspat oder Bariumsulfat eingesetzt. Besonders bevorzugt werden erfindungsgemäß mineralische teilchenförmige Füllstoffe auf der Basis von Wollastonit oder Kaolin eingesetzt.

Besonders bevorzugt werden ferner auch nadelförmige mineralische Füllstoffe als Additiv eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist der mineralische Füllstoff ein Länge : Durchmesser - Verhältnis von 2:1 bis 35:1, besonders bevorzugt von 3:1 bis 19:1, am meisten bevorzugt von 4:1 bis 12:1 auf. Die Teilchengrößenbestimmung und Verteilung erfolgt hierbei üblicherweise durch dynamische Lichtstreuung, Ultrazentrifuge oder Feldflussfraktionierung. Die mittlere Teilchengröße d50 der als Komponente h) einzusetzenden nadelförmigen mineralischen Füllstoffe liegt bevorzugt bei kleiner 20 $\mu$m, besonders bevorzugt bei kleiner 15 $\mu$m, insbesondere bevorzugt bei kleiner 10 $\mu$m bestimmt im Rahmen der vorliegenden Erfindung mit einem CILAS GRANULOMETER in Analogie zur ISO 13320:2009 mittels Laserbeugung.

Wie bereits oben bei der Komponente c) beschrieben, kann in einer bevorzugten Einsatzform der Füllstoff und/oder Verstärkungsstoff oberflächenmodifiziert sein, besonders bevorzugt mit einem Haftvermittler bzw. Haftvermittlersystem, insbesondere bevorzugt auf Silanbasis. Die Vorbehandlung ist jedoch nicht unbedingt erforderlich.

Für die Ausrüstung der als Komponente h) einzusetzenden Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Durch das Einarbeiten der als Komponente c) und h) einzusetzenden Füllstoffe ins Polymer können sich die im Rahmen der vorliegenden Erfindung genannten Längen bzw. Durchmesser verändern, weshalb vorstehend die Längen bzw. Durchmesser vor dem Vermischen mit dem Polymer angegeben sind. Beispielsweise können die im Extruder auftretenden Scherkräfte den Füllstoff zerteilen oder agglomerieren. Dies gilt für alle im Rahmen der vorliegenden Erfindung genannten teilchenförmigen Füllstoffe, die durch die Verarbeitung zur Formmasse bzw. Formkörper in der Formmasse bzw. im Formkörper einen kleineren d97- bzw. d50-Wert in Bezug auf Länge und/oder Durchmesser aufweisen, als die ursprünglich eingesetzten Füllstoffe.

In einer bevorzugten Ausführungsform betrifft die vorliegende Erfindung Zusammensetzungen enthaltend a) Poly(1,4-cyclohexylendimethylen)terephthalat), bevorzugt mit einer Viskosität von 110g/$cm^3$, b) PET, c) Glasfasern, d) Talkum und e) Aluminium-tris(diethylphosphinat).

In einer bevorzugten Ausführungsform betrifft die vorliegende Erfindung Zusammensetzungen, insbesondere Formmassen sowie daraus herzustellende Erzeugnisse, enthaltend a) Poly(1,4-cyclohexylendimethylen)terephthalat (PCT), bevorzugt mit einer Viskosität von 110g/$cm^3$, b) Polyethylenterephthalat (PET), c) Glasfasern, d) Talkum, bevorzugt mikrokristallines Talkum, e) Aluminium-tris(diethylphosphinat) und h) Pentaerythrittetrastearat (CAS No.

115-83-3).

**Verwendung**

Die vorliegende Erfindung betrifft aber auch die Verwendung der erfindungsgemäßen Zusammensetzungen, insbesondere in Form von Formmassen, zur Herstellung kurzzeitwärmeformbeständiger Erzeugnisse, bevorzugt elektrischer oder elektronischer Baugruppen und Komponenten, insbesondere bevorzugt optoelektronischer Erzeugnisse.

Die vorliegende Erfindung betrifft aber auch die Verwendung der erfindungsgemäßen Zusammensetzungen zur Steigerung der Kurzzeitwärmeformbeständigkeit von Erzeugnissen, bevorzugt von Erzeugnissen der Elektro- oder Elektronikindustrie, insbesondere elektronischen Erzeugnissen für Leiterplatten wie z.B. Gehäuse für Spulenkörper, Steckverbinder oder Kondensatoren und Leistungstransistoren sowie von optoelektronischen Erzeugnissen.

**Verfahren**

Erfindungsgemäß für den Spritzguss oder für die Extrusion einzusetzende Formmassen erhält man, indem man die einzelnen Komponenten der erfindungsgemäßen Zusammensetzungen vermischt, zu einem Strang austrägt, bis zur Granulierfähigkeit abkühlt und granuliert.

Bevorzugt erfolgt das Vermischen bei Temperaturen im Bereich von 260 bis 310°C, bevorzugt im Bereich von 270 bis 300°C, besonders bevorzugt im Bereich von 280 bis 295°C in der Schmelze. Insbesondere bevorzugt wird hierzu ein Zweiwellenextruder eingesetzt.

In einer Ausführungsform wird das Granulat, das die erfindungsgemäße Zusammensetzung enthält, getrocknet, bevorzugt bei Temperaturen im Bereich um 120°C im Vakuumtrockenschrank oder im Trockenlufttrockner für eine Zeitdauer im Bereich von 2h, bevor es als Matrixmaterial dem Spritzguss oder einem Extrusionsverfahren zwecks Herstellung von Erzeugnissen unterzogen wird.

Die vorliegende Erfindung betrifft aber auch ein Verfahren zur Herstellung von Erzeugnissen, bevorzugt kurzzeitwärmeformbeständiger Erzeugnisse, bevorzugt für die Elektro- oder Elektronikindustrie, besonders bevorzugt elektronischer oder elektrischer Baugruppen und Komponenten, indem erfindungsgemäße Zusammensetzungen vermischt, zu einer Formmasse in Form eines Strangs ausgetragen, bis zur Granulierfähigkeit abgekühlt und granuliert und als Matrixmaterial einem Spritzguss oder einer Extrusion, bevorzugt einem Spritzguss unterzogen werden.

Die vorliegende Erfindung betrifft aber auch ein Verfahren zur Verbesserung der Kurzzeitwärmeformbeständigkeit Polyester-basierter Erzeugnisse, dadurch gekennzeichnet, dass man erfindungsgemäße Zusammensetzungen in Form von Formmassen als Matrixmaterial mittels Spritzguss oder Extrusion verarbeitet.

Die Verfahren des Spritzgusses sowie der Extrusion thermoplastischer Formmassen sind dem Fachmann bekannt.

Erfindungsgemäße Verfahren zur Herstellung von Erzeugnissen durch Extrusion oder Spritzguss arbeiten bei Schmelzetemperaturen im Bereich von 260 bis 330°C, bevorzugt im Bereich von 270 bis 300°C, besonders bevorzugt im Bereich von 280 bis 290°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen (Thielen, Hartwig, Gust, "Blasformen von Kunststoffhohlkörpern", Carl Hanser Verlag, München 2006, Seiten 127-129).

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet

1. Plastifizieren / Aufschmelzen

2. Einspritzphase (Füllvorgang)

3. Nachdruckphase (wegen thermischer Kontraktion bei der Kristallisation)

4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Kunststoffstrang, hier ein Polyamid, im Extruder eingesetzt, wobei der Extruder eine Maschine zur Herstellung thermoplastischer Formstücke ist. Man unterscheidet Einschneckenextruder und Doppelschneckenextruder sowie die jeweiligen Untergruppen konventioneller Einschneckenextruder, förderwirksamer Einschneckenextruder, gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft folglich auch Erzeugnisse, insbesondere Kurzzeitformbeständige Erzeugnisse, erhältlich durch Extrusion, bevorzugt Profil-Extrusion, oder Spritzguss der aus den erfindungsgemäßen Zusammensetzungen erhältlichen Formmassen.

Die vorliegende Erfindung betrifft bevorzugt ein Verfahren zur Herstellung kurzzeitwärmeformbeständiger Erzeugnisse, dadurch gekennzeichnet, dass Zusammensetzungen, enthaltend

a) 3 bis 30 Gew.-% bevorzugt 5 bis 25 Gew.-%, besonders bevorzugt 10 bis 20 Gew.-% Poiy(1,4-cydohexy)endimethylen)terephthalat) (PCT), wobei der Anteil an PCT bezogen auf die Summe aller enthaltener thermoplastischen Polymere in der Zusammensetzung im Bereich von 5 bis 40 Gew-%, bevorzugt 7 bis 30 Gew-%, besonders bevorzugt bei 10-25% Gew.-% liegt,

b) 15 bis 91,99 Gew.-%, bevorzugt 20 bis 70 Gew.-%, besonders bevorzugt 30 bis 60 Gew.-% Polyethylenterephthalat (PET),

c) 5 bis 70 Gew.-%, bevorzugt 10 bis 45 Gew.-%, besonders bevorzugt 15 bis 35 Gew.-% Glasfasern, und

d) 0,01 bis 10 Gew.-%, bevorzugt 0,05 bis 5 Gew-%, besonders bevorzugt 0,1 bis 2 Gew.-% Talkum, bevorzugt mikrokristallines Talkum,

wobei die einzelnen Komponenten in der Weise miteinander zu kombinieren sind, dass die Summe aller Gewichtsprozente 100 ergibt und die zusätzlich zu den Komponenten a), b), c) und d) noch e) wenigstens ein Flammschutzmittel zu 1 bis 50 Gew.-%, enthalten, wobei wenigstens eine der übrigen Komponenten soweit zu reduzieren ist, dass die Summe aller Gewichtsprozente 100 ergibt und als Flammschutzmittel hatogenfreie Flammschutzmittel auf Basis von organischen oder anorganischen Phosphorverbindunaen eingesetzt werden, vermischt, zu einer Formmasse in Form eines Strangs ausgetragen, bis zur Granulierfähigkeit abgekühlt und granuliert und einem Spritzguss oder einer Extrusion

unterzogen werden.

Die durch die genannten Verfahren erhältlichen Erzeugnisse zeigen überraschenderweise eine hervorragende Kurzzeitwärmebeständigkeit, insbesondere in Lötprozessen, sowie optimierte Eigenschaften in den mechanischen Eigenschaften. Die aus den erfindungsgemäßen Zusammensetzungen herzustellenden Formmassen für den Spritzguss und die Extrusion zeichnen sich darüber hinaus durch eine gegenüber dem Stand der Technik gute Verarbeitbarkeit aus.

Die auf erfindungsgemäße Weise hergestellten Erzeugnisse eignen sich deshalb auch hervorragend für elektrische oder elektronische Erzeugnisse, bevorzugt optoelektronische Erzeugnisse, insbesondere LEDs oder OLEDs. Eine Leuchtdiode (auch Lumineszenz-Diode, englisch light-emitting diode, deutsch lichtemittierende Diode, LED) ist ein elektronisches Halbleiter-Bauelement. Fließt durch die Diode Strom in Durchlassrichtung, so strahlt sie Licht, Infrarotstrahlung (als Infrarotleuchtdiode) oder auch Ultraviolettstrahlung mit einer vom Halbleitermaterial und der Dotierung abhängigen Wellenlänge ab. Eine organische Leuchtdiode (englisch organic light emitting diode, OLED) ist ein dünnfilmiges leuchtendes Bauelement aus organischen halbleitenden Materialien, das sich von den anorganischen Leuchtdioden (LED) dadurch unterscheidet, dass Stromdichte und Leuchtdichte geringer sind und keine einkristallinen Materialien erforderlich sind. Im Vergleich zu herkömmlichen (anorganischen) Leuchtdioden lassen sich organische Leuchtdioden daher kostengünstiger herstellen, ihre Lebensdauer ist jedoch derzeit geringer als die herkömmlicher Leuchtdioden.

## Beispiele

Zur Herstellung der erfindungemäß beschriebenen Zusammensetzungen wurden die einzelnen Komponenten in einem Zweiwellenextruder (ZSK 26 Mega Compounder der Fa. Coperion Werner & Pfleiderer (Stuttgart, Deutschland mit 3-Loch Düsenplatte und einem Düsenlochdurchmesser von 3mm) bei Temperaturen zwischen 280 und 295°C in der Schmelze vermischt, als Strang ausgetragen, bis zur Granulierfähigkeit abgekühlt und granuliert. Vor weiteren Schritten wurde das Granulat bei 120°C im Vakuumtrockenschrank für ca. 2h getrocknet. Dabei wurde die Verarbeitbarkeit in Abhängigkeit zur Temperatur qualitativ bewertet: "+" steht dabei für eine problemlose Verarbeitung, "o" für eine eingeschränkte Verarbeitbarkeit, z.B. wegen eines stark ansteigenden Düsendrucks oder der Zersetzung empfindlicher Additive.

Die Platten und Prüfkörper für die in der Tabelle 1 aufgeführten Untersuchungen wurden auf einer handelsüblichen Spritzgießmaschine bei einer Massetemperatur von 280- 290°C und einer Werkzeugtemperatur von 80-120°C verspritzt. Eine Kenngröße für die Qualität des Spritzgießvorgangs war im Rahmen der vorliegenden Erfindung die Entformbarkeit: Für die Entformbarkeit ist eine schnelle Kristallisation vorteilhaft, um möglichst schnell und ohne Verformung das Erzeugnis aus dem Werkzeug auswerfen zu können. In den in Tabelle 1 dargestellten Beispielen und Vergleichsbeispielen steht "+" für eine gute, "o" für eine befriedigende und "-" für eine schlechte Entformbarkeit.

Kurzzeitwärmeformbeständigkeit

Der Test zur Bestimmung der **Schmelzesteifigkeit** als Maß für die Kurzzeitwärmeformbeständigkeit bzw. Lötbadbeständigkeit simuliert die Bedingungen des Wellenlötens wie folgt:
Aus einer Platte der mit einer Dicke von 1,0 mm wurden Prüfkörper der Abmaße 20 • 10 • 1 mm ausgeschnitten. Diese wurden für 15 min in einen mit der in Tabelle 1 angegebenen Temperatur beheizten handelsüblichen Heißluftofen verbracht. Anschließend wurde das Anschmelzverhalten der Probekörper visuell begutachtet. "+" steht dabei für eine Probe ohne visuell beobachtbares Anschmelzen, "o" für eine Probe mit abgerundeten Kanten und "-" für eine über die gesamte Oberfläche angeschmolzene Probe.

### IZOD Schlagzähigkeit

Die Bestimmung der Schlagzähigkeit nach IZOD erfolgte in Analogie zu ISO180-1 an Probekörpern der Abmessung 80mm • 10mm • 4mm.

### Biegefestigkeit, Randfaserdehnung

Die Prüfung der Biegefestigkeit und der Randfaserdehnung erfolgte in Analogie zu ISO178 an Probekörpern der Abmessung 80mm*10mm*4mm.

### Einsatzstoffe

Komponente a): PCT [CAS-Nr. 24936-69-4] mit einer Viskosität von 110g/$cm^3$]

Komponente b): PET: Polyethylenterephthalat (Polyester Chips PET V004, Fa. Invista, Wichita, USA)

Komponente c): Mit silanhaltigen Verbindungen beschlichtete Glasfaser mit einem Durchmesser von 10 µm (CS 7967, Handelsprodukt der Lanxess N.V., Antwerpen, Belgien)

Komponente d): Talkum: Mistron® R10 der Imerys Talc Group, Toulouse, Frankreich (Rio Tinto Group)

Komponente e): Aluminium-tris(diethylphosphinat) Exolit® OP1240 der Clariant International Ltd., Muttenz, Schweiz

Komponente h): weitere für die Verwendung in Polyestern gebräuchliche Additive wie zum Beispiel Entformungsmittel, insbesondere Pentaerythrittetrastearat (PETS), Thermostabilisatoren (z.B. auf Basis von Phenylphosphiten). Art und Menge der als Komponente H zusammengefassten Additive stimmen in Art und Menge für Beispiele und Vergleichsbeispiele überein.

Tabelle 1 zeigt, dass bei thermisch empfindlichen Flammschutzmitteln wie Komponente e) nur im Falle der erfindungsgemäßen Polyesterblends sowohl eine gute Verarbeitbarkeit und damit auch gute mechanische Daten als auch eine erhöhte Kurzzeitwärmeformbeständigkeit bei Temperaturen oberhalb des Schmelzpunktes von Komponente a gegeben ist. Dies ist eine wichtige Voraussetzung für Anwendungen, die wie z.B. Elektronikbauteile, kurzzeitig Lötbadtemperaturen bis 285°C ausgesetzt sein können.

**Tabelle 1**: Polyesterblends mit thermisch empfindlichen Flammschutzmitteln Alle Mengenangaben der Komponenten in Tabelle 1 sind in Gew.-%.

| | Vgl. 1 | Vgl. 2 | Vgl. 3 | Bsp. 1 | Bsp. 2 |
|---|---|---|---|---|---|
| Komponente a) | | 40 | 53 | 10 | 15 |
| Komponente b) | 53 | 13 | | 43 | 38 |
| Komponente c) | 30 | 30 | 30 | 30 | 30 |
| Komponente d) | 0,5 | 0,5 | 0,5 | 0,5 | 0,5 |
| Komponente e) | 15 | 15 | 15 | 15 | 15 |
| Komponente h) | 1,5 | 1,5 | 1,5 | 1,5 | 1,5 |
| Verarbeitbarkeit bei 290°C | + | ○ | ○ | + | + |
| Entformbarkeit | + | - | ○ | + | + |
| Schmelzesteifigkeit bei 265°C | + | + | + | + | + |
| Schmelzesteifigkeit bei 275°C | ○ | + | + | + | + |
| Schmelzesteifigkeit bei 285°C | - | + | + | + | + |
| IZOD [kJ/m$^2$] | + | - | - | + | + |
| Biegefestigkeit [MPa] | + | - | - | + | + |
| Randfaserdehnung [%] | + | - | - | + | + |

**Patentansprüche**

**1.** Zusammensetzungen enthaltend

a) 3 bis 30 Gew.-% Poly(1,4-cyclohexylendimethylenterephthalat) (PCT), wobei der Anteil an PCT bezogen auf die Summe aller enthaltener thermoplastischen Polymere in der Zusammensetzung im Bereich von 5 bis 40 Gew.-% liegt,
b) 15 bis 91,99 Gew.-% Polyethylenterephthalat (PET),
c) 5 bis 70 Gew.-% Glasfasern, und
d) 0,01 bis 10 Gew.-% Talkum, enthalten, wobei die einzelnen Komponenten in der Weise miteinander zu kombinieren sind, dass die Summe aller Gewichtsprozente 100 ergibt,

und die zusätzlich zu den Komponenten a), b) c) und d) noch e) wenigstens ein Flammschutzmittel zu 1 bis 50

Gew.-%, enthalten, wobei wenigstens eine der übrigen Komponenten soweit zu reduzieren ist, dass die Summe aller Gewichtsprozente 100 ergibt und als Flammschutzmittel halogenfreie Flammschutzmittel auf Basis von organischen oder anorganischen Phosphorverbindungen eingesetzt werden.

2. Zusammensetzungen gemäß Anspruch 1, **dadurch gekennzeichnet, dass** als organische oder anorganische Phosphorverbindungen Metallphosphinate, insbesondere Aluminiumphosphinat oder Zinkphosphinat, Metallphosphonate, insbesondere Aluminiumphosphonat, Calciumphosphonat oder Zinkphosphonat sowie die entsprechenden Hydrate der Metallphosphonate, sowie Derivate der 9,10-Dihydro-9-oxa-10-phosphaphenanthren-10-oxide (DOPO-Derivate), Triphenylphosphat (TPP), Resorcinol-bis-(diphenylphosphat) (RDP), einschließlich Oligomere sowie Bisphenol-A-bis-diphenylphosphat (BDP) einschließlich Oligomere, Polyphosphonate, ferner Zink-bis(diethylphosphinat), Aluminium-tris(diethylphosphinat), Melaminphosphat, Melaminpyrophosphat, Melaminpolyphosphat, Melamin-poly(aluminiumphosphat), Melamin-poly(zinkphosphat) oder Phenoxyphosphazenoligomere und deren Mischungen eingesetzt werden.

3. Zusammensetzungen gemäß Anspruch 2, **dadurch gekennzeichnet, dass** Aluminium-tris(diethylphosphinat) eingesetzt wird.

4. Zusammensetzungen gemäß einem der Ansprüche 1 bis 3, **dadurch gekennzeichnet, dass** diese zusätzlich zu den Komponenten a) bis e) oder anstelle der Komponente e) noch f) wenigstens ein Additiv mit zwei Epoxygruppen pro Molekül, bevorzugt zu 0,01 bis 15 Gew.-%, enthalten, wobei wenigstens eine der übrigen Komponenten soweit zu reduzieren ist, dass die Summe aller Gewichtsprozente 100 ergibt.

5. Zusammensetzungen gemäß Anspruch 4, **dadurch gekennzeichnet, dass** Komponente f) aus der Reihe der Bisphenol-Diglycidylether, bevorzugt der 2,2-Bis(4-hydroxyphenyl)propan, 1,1-Bis(4-hydroxyphenyl)-1-phenylethan, Bis(4-hydroxyphenyl)sulfon und Bis(4-hydroxydiphenyl)methan ausgewählt wird.

6. Zusammensetzungen gemäß einem der Ansprüche 1 bis 5, **dadurch gekennzeichnet, dass** diese zusätzlich zu den Komponenten a) bis f) oder anstelle der Komponenten e) und/oder f) noch g) Titandioxid, bevorzugt zu 0,01 bis 30 Gew.-%, enthalten, wobei wenigstens eine der übrigen Komponenten soweit zu reduzieren ist, dass die Summe aller Gewichtsprozente 100 ergibt.

7. Zusammensetzungen gemäß einem der Ansprüche 1 bis 6, **dadurch gekennzeichnet, dass** diese zusätzlich zu den Komponenten a) bis g) oder anstelle der Komponenten e) und/oder f) und/oder g) noch h) wenigstens ein sonstiges, von den Komponenten c) bis g) unterschiedliches Additiv, bevorzugt zu 0,01 bis 15 Gew.-%, enthalten, wobei wenigstens eine der übrigen Komponenten soweit zu reduzieren ist, dass die Summe aller Gewichtsprozente 100 ergibt.

8. Verwendung der Zusammensetzungen gemäß einem der Ansprüche 1 bis 7, insbesondere in Form von Formmassen, zur Herstellung kurzzeitwärmeformbeständiger Erzeugnisse, bevorzugt elektrischer oder elektronischer Baugruppen und Komponenten, insbesondere bevorzugt optoelektronischer Erzeugnisse.

9. Verfahren zur Herstellung kurzzeitwärmeformbeständiger Erzeugnisse, **dadurch gekennzeichnet, dass** Zusammensetzungen gemäß einem der Ansprüche 1 bis 7 vermischt, zu einer Formmasse in Form eines Strangs ausgetragen, bis zur Granulierfähigkeit abgekühlt und granuliert und als Matrixmaterial einem Spritzguss oder einer Extrusion unterzogen werden.

## Claims

1. Compositions comprising

   a) 3 to 30% by weight of poly(1,4-cyclohexylenedimethylene) terephthalate (PCT), where the proportion of PCT based on the sum total of all the thermoplastic polymers present in the composition is in the range from 5 to 40% by weight,
   b) 15 to 91.99% by weight of polyethylene terephthalate (PET),
   c) 5 to 70% by weight of glass fibres, and
   d) 0.01 to 10% by weight of talc, where the individual components should be combined with one another in such a way that the sum total of all the percentages by weight is 100,

and which comprise, in addition to components a), b), c) and d), also e) at least one flame retardant to an extent of 1 to 50% by weight, in which case the level of at least one of the other components should be reduced such that the sum total of all the percentages by weight is 100 and the flame retardants used are halogen-free flame retardants based on organic or inorganic phosphorus compounds.

2. Compositions according to Claim 1, **characterized in that** the organic or inorganic phosphorus compounds used are metal phosphinates, especially aluminium phosphinate or zinc phosphinate, metal phosphonates, especially aluminium phosphonate, calcium phosphonate or zinc phosphonate and the corresponding hydrates of the metal phosphonates, and derivatives of the 9,10-dihydro-9-oxa-10-phosphaphenanthrene 10-oxides (DOPO derivatives), triphenyl phosphate (TPP), resorcinol bis(diphenyl phosphate) (RDP), including oligomers, and bisphenol A bis(diphenyl phosphate) (BDP) including oligomers, polyphosphonates, and also zinc bis(diethylphosphinate), aluminium tris(diethylphosphinate), melamine phosphate, melamine pyrophosphate, melamine polyphosphate, melamine poly(aluminium phosphate), melamine poly(zinc phosphate) or phenoxyphosphazene oligomers and mixtures thereof.

3. Compositions according to Claim 2, **characterized in that** aluminium tris(diethylphosphinate) is used.

4. Compositions according to any of Claims 1 to 3, **characterized in that** they comprise, in addition to components a) to e) or instead of component e), also f) at least one additive having two epoxy groups per molecule, preferably to an extent of 0.01 to 15% by weight, in which case the level of at least one of the other components should be reduced such that the sum total of all the percentages by weight is 100.

5. Compositions according to Claim 4, **characterized in that** component f) is selected from the group of the bisphenol diglycidyl ethers, preferably 2,2-bis(4-hydroxyphenyl)propane, 1,1-bis(4-hydroxyphenyl)-1-phenylethane, bis(4-hydroxyphenyl) sulfone and bis(4-hydroxydiphenyl)methane.

6. Compositions according to any of Claims 1 to 5, **characterized in that** they comprise, in addition to components a) to f) or instead of components e) and/or f), also g) titanium dioxide, preferably to an extent of 0.01 to 30% by weight, in which case the level of at least one of the other components should be reduced such that the sum total of all the percentages by weight is 100.

7. Compositions according to any of Claims 1 to 6, **characterized in that** they comprise, in addition to components a) to g) or instead of components e) and/or f) and/or g), also h) at least one other additive different from components c) to g), preferably to an extent of 0.01 to 15% by weight, in which case the level of at least one of the other components should be reduced such that the sum total of all the percentages by weight is 100.

8. Use of the compositions according to any of Claims 1 to 7, especially in the form of moulding compositions, for production of products resistant to heat distortion for short periods, preferably electric or electronic assemblies and components, especially preferably optoelectronic products.

9. Process for producing products resistant to heat distortion for short periods, **characterized in that** compositions according to any of Claims 1 to 7 are mixed, discharged to give a moulding composition in the form of an extrudate, the extrudate is cooled until it is pelletizable and pelletized, and the pelletized material is subjected to an injection moulding or extrusion operation in the form of a matrix material.

## Revendications

1. Compositions contenant

   a) 3 à 30% en poids de poly(téréphtalate de 1,4-cyclohexylènediméthylène) (PCT), la proportion de PCT par rapport à la somme de tous les polymères thermoplastiques contenus dans la composition se situant dans la plage de 5 à 40% en poids,
   b) 15 à 91,99% en poids de poly(téréphtalate d'éthylène) (PET),
   c) 5 à 70% en poids de fibres de verre et
   d) 0,01 à 10% en poids de talc, les différents composants étant à combiner les uns avec les autres de manière telle que la somme de tous les pourcentages en poids vaut 100,

et qui contiennent, en plus des composants a), b), c) et d), encore e) au moins un agent ignifuge à raison de 1 à 50% en poids, au moins un des autres composants étant à réduire dans une mesure telle que la somme de tous les pourcentages en poids vaut 100 et des agents ignifuges exempts d'halogène à base de composés phosphorés organiques ou inorganiques étant utilisés comme agent ignifuge.

2. Compositions selon la revendication 1, **caractérisées en ce que** des phosphinates métalliques, en particulier le phosphinate d'aluminium ou le phosphinate de zinc, des phosphonates métalliques, en particulier le phosphonate d'aluminium, le phosphonate de calcium ou le phosphonate de zinc ainsi que les hydrates correspondants des phosphonates métalliques ainsi que des dérivés du 10-oxyde de 9,10-dihydro-9-oxa-10-phosphaphénanthrène (dérivés de DOPO), le phosphate de triphényle (TPP), le résorcinol bis-(phosphate de diphényle) (RDP), y compris les oligomères ainsi que le bisphénol-A bis (phosphate de diphényle) (BDP) y compris les oligomères, les polyphosphonates, en outre le zinc-bis (phosphinate de diéthyle), l'aluminium-tris(phosphinate de diéthyle), le phosphate de mélamine, le pyrophosphate de mélamine, le polyphosphate de mélamine, le mélamine-poly(phosphate d'aluminium), le mélamine-poly(phosphate de zinc) ou les oligomères de phénoxyphosphazène et leurs mélanges sont utilisés comme composés phosphorés organiques ou inorganiques.

3. Compositions selon la revendication 2, **caractérisées en ce que** l'aluminium-tris(phosphinate de diéthyle) est utilisé.

4. Compositions selon l'une quelconque des revendications 1 à 3, **caractérisées en ce qu'**elles contiennent, en plus des composants a) à e) ou au lieu des composants e), encore f) au moins un additif présentant deux groupes époxy par molécule, de préférence à raison de 0,01 à 15% en poids, au moins un des autres composants étant à réduire dans une mesure telle que la somme de tous les pourcentages en poids vaut 100.

5. Compositions selon la revendication 4, **caractérisées en ce que** le composant f) est choisi dans la série formée par le bisphénol-diglycidyléther, de préférence le 2,2-bis(4-hydroxyphényl)propane, le 1,1-bis(4-hydroxyphényl)-1-phényléthane, la bis(4-hydroxyphényl)sulfone et le bis(4-hydroxydiphényl)méthane.

6. Compositions selon l'une quelconque des revendications 1 à 5, **caractérisées en ce qu'**elles contiennent, en plus des composants a) à f) ou au lieu des composants e) et/ou f), encore g) du dioxyde de titane, de préférence à raison de 0,01 à 30% en poids, au moins un des autres composants étant à réduire dans une mesure telle que la somme de tous les pourcentages en poids vaut 100.

7. Compositions selon l'une quelconque des revendications 1 à 6, **caractérisées en ce qu'**elles contiennent, en plus des composants a) à g) ou au lieu des composants e) et/ou f) et/ou g), encore h) au moins un autre additif, différent des composants c) à g), de préférence à raison de 0,01 à 15% en poids, au moins un des autres composants étant à réduire dans une mesure telle que la somme de tous les pourcentages en poids vaut 100.

8. Utilisation des compositions selon l'une quelconque des revendications 1 à 7, en particulier sous forme de masses de moulage pour la fabrication de produits présentant une résistance à la déformation thermique à court terme, de préférence des modules ou des composants électriques ou électroniques, en particulier de préférence des produits optoélectroniques.

9. Procédé pour la production de produits présentant une résistance à la déformation thermique à court terme, **caractérisé en ce que** des compositions selon l'une quelconque des revendications 1 à 7 sont mélangées, évacuées en tant que masse de moulage sous forme d'un brin, refroidies jusqu'à l'aptitude à la granulation et granulées et soumises, en tant que matériau de matrice, à un moulage par injection ou à une extrusion.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2007033129 A1
- WO 2010049531 A1
- WO 20101049531 A1
- US 4874809 A
- DE 2407674 A
- US 4035958 A
- DE 2407776 A
- DE 2715932 A
- US 4176224 A
- DE 1900270 A
- US 3692744 A
- WO 2014001158 A1
- WO 9817720 A
- US 6538024 A
- DE 2035390 A
- US 3644574 A
- DE 2248242 A
- GB 1409275 A
- US 4937285 A
- DE 3704657 A
- US 4859740 A
- DE 3704655 A
- US 4861831 A
- DE 3631540 A
- US 4806593 A
- DE 3631539 A
- US 4812515 A


### In der Beschreibung aufgeführte Nicht-Patentliteratur


- **BODO CARLOWITZ.** Tabellarische Übersicht über die Prüfung von Kunststoffen. Giesel-Verlag, 1992, 16-17
- *CHEMICAL ABSTRACTS,* 24936-69-4
- *CHEMICAL ABSTRACTS,* 25038-59-9
- Kunststoff-Handbuch. Karl-Hanser-Verlag, 1973, vol. VIII, 695-703
- Ullmanns Enzyclopädie der technischen Chemie. Verlag Chemie, 1980, vol. 19, 65 ff
- **M. SCHOßIG.** Schädigungsmechanismen in faserverstärkten Kunststoffen. Vieweg und Teubner Verlag, 2011, vol. 1, 35
- *CHEMICAL ABSTRACTS,* 65997-17-3
- **J.KASTNER et al.** Quantitative Messung von Faserlängen und -verteilung in faserverstärkten Kunststoffteilen mittels μ-Röntgen-Computertomographie. *DGZfP-Jahrestagung,* 2007
- *CHEMICAL ABSTRACTS,* 14807-96-6
- *CHEMICAL ABSTRACTS,* 225789-38-8
- *CHEMICAL ABSTRACTS,* 41583-09-9
- *CHEMICAL ABSTRACTS,* 37640-57-6
- *CHEMICAL ABSTRACTS,* 28212-48-8
- *CHEMICAL ABSTRACTS,* 1675-54-3
- *CHEMICAL ABSTRACTS,* 13463-67-7
- *CHEMICAL ABSTRACTS,* 1317-70-0
- *CHEMICAL ABSTRACTS,* 1317-80-2
- Gächter, Müller, Kunststoff-Additive. Hanser-Verlag, 1989
- Plastics Additives Handbook. Hanser-Verlag, 2001
- *CHEMICAL ABSTRACTS,* 31570-04-4
- *CHEMICAL ABSTRACTS,* 26741-53-7
- *CHEMICAL ABSTRACTS,* 80693-00-1
- *CHEMICAL ABSTRACTS,* 154862-43-8
- *CHEMICAL ABSTRACTS,* 26523-78-4
- *CHEMICAL ABSTRACTS,* 161717-32-4
- *CHEMICAL ABSTRACTS,* 119345-01-6
- *CHEMICAL ABSTRACTS,* 38613-77-3
- *CHEMICAL ABSTRACTS,* 130-10-5
- *CHEMICAL ABSTRACTS,* 1344-28-1
- Ullmann, Enzyklopädie der Technischen Chemie. 1980, vol. 19, 280 ff
- *CHEMICAL ABSTRACTS,* 9003-56-9
- *CHEMICAL ABSTRACTS,* 115-83-3
- **THIELEN ; HARTWIG ; GUST.** Blasformen von Kunststoffhohlkörpern. Carl Hanser Verlag, 2006, 127-129